**Europäisches Patentamt**

**European Patent Office**

**Office européen des brevets**

(19)

(11) Veröffentlichungsnummer: **0 021 253**
**B1**

# EUROPÄISCHE PATENTSCHRIFT

(12)

(45) Veröffentlichungstag der Patentschrift:
03.10.84

(51) Int. Cl.³: **G 01 N 23/223**

(21) Anmeldenummer: **80103253.3**

(22) Anmeldetag: **11.06.80**

(54) **Einrichtung für die Röntgenfluoreszenzanalyse.**

(30) Priorität: **25.06.79 DE 2925593**

(43) Veröffentlichungstag der Anmeldung:
**07.01.81 Patentblatt 81/1**

(45) Bekanntmachung des Hinweises auf die Patenterteilung:
**03.10.84 Patentblatt 84/40**

(84) Benannte Vertragsstaaten:
**CH DE LI NL**

(56) Entgegenhaltungen:
**DE - A - 1 901 666**
**DE - A - 2 329 190**
**US - A - 2 835 820**
**US - A - 3 051 833**
**US - A - 3 927 319**

(73) Patentinhaber: **Siemens Aktiengesellschaft, Berlin und München Wittelsbacherplatz 2, D-8000 München 2 (DE)**

(72) Erfinder: **Weichert, Norbert, Dr. Dipl.-Phys, Max-Beckmann-Strasse 2, D-7505 Ettlingen 6 (DE)**

## Beschreibung

Die Erfindung bezieht sich auf eine Einrichtung für die Röntgenfluoreszenzanalyse mit Mitteln zur Anregung von Röntgenfluoreszenzstrahlung in einem Bereich auf einer Probe, einem Analysatorkristall und einem linearen ortsempfindlichen Detektor.

Eine derartige Einrichtung ist einem Forschungsbericht «X-ray fluorescence analysis by means of crystal dispersion and a position-sensitive counter» aus «Spectrochimica Acta» Vol. 31B (1976), Seiten 221 bis 223 zu entnehmen. Die Einrichtung beruht auf einem schon 1916 von Seemann angegebenen einfachen Röntgenspektrographen, der allerdings noch mit fotoempfindlichem Film arbeitete. Die von einer Probenoberfläche ausgehende Fluoreszenzstrahlung fällt dabei in einen zwischen einem schmalen Streifen eines Analysatorkristalls und einer dem Streifen gegenüberstehenden Lamelle gebildeten Schlitz. Sie wird am Analysatorkristall gemäss der Bragg'schen Beziehung abgebeugt und fällt auf der anderen Seite des Schlitzes – je nach Wellenlänge – auf verschiedene Orte eines ortsempfindlichen Detektors. Jede Strahlung einer Wellenlänge stammt dabei aus einem anderen engbegrenzten Gebiet der Probenoberfläche, so dass diese bekannte Einrichtung ohne weiteres nur für homogene Proben verwendbar ist.

Die Erfindung ging von der Aufgabe aus, eine Einrichtung zu schaffen, mit der auch inhomogene Proben untersucht werden können.

Diese Aufgabe wird durch den Gegenstand des Anspruches 1 gelöst.

Mit der neuen Einrichtung kann alle von einem Gebiet auf der Oberfläche einer Probe ausgehende Fluoreszenzstrahlung verschiedener Wellenlänge erfasst werden. Strahlung unterschiedlicher Wellenlängen stammt dabei nicht von verschiedenen Orten auf der Probenoberfläche, so dass auch inhomogene Proben ohne weiteres untersucht werden können.

Die Mittel zur Gestaltung des Bereichs sind zweckmässig eine Punkt- oder Schlitzblende, durch die die Probe mit einer die Röntgenfluoreszenz auslösenden Primärstrahlung bestrahlt ist.

Bei einer anderen Ausführungsform der Erfindung können die Mittel zur Gestaltung des Bereichs mit den Mitteln zur Anregung der Quelle kombiniert sein. Es ist dabei an eine Punkt- oder Schlitzblende für die anregende Primärstrahlung bzw. an einen fokussierten Elektronenstrahl mit punkt- oder linienförmigem Querschnitt gedacht. Der parabelförmig gebogene Analysatorkristall kann näherungsweise durch einzelne, nicht parabelförmig gebogene Kristallstücke ersetzt werden, deren mittlere Krümmungen mit den Krümmungen der durch sie ersetzten Parabelstücke etwa übereinstimmen.

Mit einem doppeltgekrümmten Kristall ist eine besonders lichtstarke Anordnung zu erzielen, wenn die zweite Krümmung des Kristalls rotationssymmetrisch bezüglich der Detektorachse, beispielsweise einem Zählrohrdraht, ausgebildet wird.

Alle vom Analysatorkristall abgebeugten Strahlen verlaufen parallel zur Parabelachse und treffen die Achse des ortsempfindlichen Detektors, beispielsweise den Draht eines Zählrohres, stets senkrecht. Dies fördert die Erzielung einer guten Ortsauflösung.

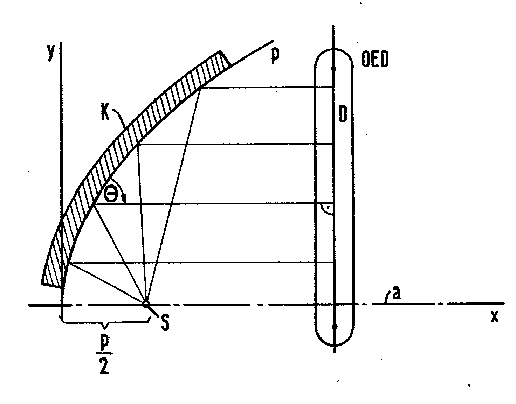

Die Erfindung wird anhand einer Figur erläutert. Die Figur stellt einen schematisierten Schnitt durch die Anordnung von Analysatorkristall und Detektor dar. Die Mittel zur Anregung der Röntgenfluoreszenzstrahlung sind der Übersichtlichkeit halber weggelassen worden. Sie können an Stellen angebracht werden, an denen sie den Strahlengang der Röntgenfluoreszenzstrahlung nicht stören, beispielsweise in der Nähe des Scheitels der Parabel. Die Probenoberfläche kann beispielsweise parallel zur Sehne des durch den Analysatorkristall bedeckten Parabelabschnittes ausgerichtet sein.

In der Figur ist in einem rechtwinkligen Koordinatensystem mit einer x- und y-Achse eine Parabel P eingezeichnet, deren Scheitel im Nullpunkt des Koordinatensystems liegt. Ein Teil der Parabel ist mit einem parabelförmig gekrümmten Kristall K belegt, der auch eine Ausdehnung senkrecht zur Zeichenebene hat. Eine Quelle S für Röntgenfluoreszenzstrahlung liegt im Fokus der Parabel mit dem Scheitelabstand $\frac{p}{2}$. Senkrecht zur x-Achse, die gleichzeitig die Parabelachse a bildet, also parallel zur y-Achse, liegt die Ortsachse eines ortsempfindlichen Detektors OED, der von einem Zählrohr gebildet ist, dessen Draht D in der Achse des Detektors OED liegt. Alle von der Quelle S im Fokus ausgehenden Strahlen werden, sofern sie der Bragg'schen Bedingung

$$z \cdot \lambda = 2d \sin \theta$$

genügen, parallel zur Parabelachse vom Kristall abgebeugt und treffen den Zählrohrdraht D unter einem rechten Winkel. Der Winkel θ ist der Winkel zwischen einem abgebeugten Strahl und der Tangente an die Parabel im Auftreffpunkt des einfallenden Strahls. d ist der Abstand der Netzebenen und λ die Wellenlänge der Röntgenfluoreszenzstrahlung. Die Gleichung für die Parabel P kann in der Form

$$y^2 = 2px$$

geschrieben werden. Dann gilt für den Tangens des Winkels θ

$$tg\ \theta = \frac{dy}{dx} = \frac{p}{y} \qquad \begin{array}{l} \text{weil } y^2 = 2px \\ \text{ist } 2yy' = 2p \\ \text{und } y' = \frac{p}{y}. \end{array}$$

Durch Umrechnung der tg- in eine sin-Funktion ergibt sich

$$\sin\theta = \frac{\tan\theta}{\sqrt{1+\tan^2\theta}} = \frac{p}{y} \cdot \frac{1}{\sqrt{1+\frac{p^2}{y^2}}} = \left(\frac{y^2}{p^2}+1\right)^{-\frac{1}{2}}$$

und in die Bragg'sche Beziehung eingesetzt

$$z \cdot \lambda = \frac{2d}{\sqrt{1+\frac{y^2}{p^2}}}$$

Dies ist die Dispersionsgleichung für die Abhängigkeit der Wellenlänge $\lambda$ von der Drahtposition y.

**Patentansprüche**

1. Einrichtung für die Röntgenfluoreszenzanalyse mit Mitteln zur Anregung von Röntgenfluoreszenzstrahlung in einem Bereich (5) auf einer Probe, einem Analysatorkristall (K) und einem linearen ortsempfindlichen Detektor OED, dadurch gekennzeichnet, dass Mittel dafür vorgesehen sind, den Bereich (5) angenähert punkt- oder linienförmig zu gestalten, dass als Ort des Bereichs (S) der Fokus des in mindestens einer Querschnittsebene parabelförmig gekrümmten Analysatorkristalls (K), dessen Netzebenen parallel zu seiner Oberfläche verlaufen, vorgesehen ist, und dass der lineare ortsempfindliche Detektor (OED) mit einer in seiner linearen Erstreckungsrichtung verlaufenden Achse (D) in der genannten Querschnittsebene senkrecht zur Parabelachse (a) des parabolischen Analysatorkristalls (K) diesem gegenüberstehend angeordnet ist.

2. Einrichtung nach Anspruch 1, dadurch gekennzeichnet, dass die Mittel zur Gestaltung des Bereichs (S) eine Punkt- bzw. Schlitzblende sind, hinter der die von einer Primärstrahlung bestrahlte Probe angeordnet ist.

3. Einrichtung nach Anspruch 1, dadurch gekennzeichnet, dass die Mittel zur Gestaltung des Bereichs (S) mit den Mitteln zur Anregung des Bereichs (S) kombiniert sind.

4. Einrichtung nach Anspruch 1 oder einem der vorausgehenden Ansprüche, dadurch gekennzeichnet, dass der parabelförmig gebogene Analysatorkristall näherungsweise durch einzelne, nicht parabelförmig gebogene Kristallstücke ersetzt ist, deren mittlere Krümmungen mit den Krümmungen der durch sie ersetzten Parabelstücke etwa übereinstimmen.

5. Einrichtung nach einem der vorausgehenden Ansprüche, dadurch gekennzeichnet, dass ein doppeltgekrümmter Analysatorkristall vorgesehen ist, dessen zweite Krümmung rotationssymmetrisch bezüglich der Detektorachse (D) verläuft.

**Claims**

1. Apparatus for X-ray fluorescence analysis comprising means for exciting X-ray fluorescence radiation in a region (S) on a sample, an analyser crystal (K) and a linear position-sensitive detector OED, characterised in that means are provided for forming the region (S) so as to be approximately punctiform or linear; that there is provided as the position of the region (S), the focus (S) of the analyser crystal (K) which is curved parabolically in at least one cross-sectional plane and the lattice planes of which run parallel to its surface; and that the linear position-sensitive detector (OED) is arranged opposite to the parabolic analyser crystal (K) with an axis (D) extending in its direction of linear extension, in said cross-sectional plane at right angles to the parabola axis (a) of the parabolic analyser crystal (K).

2. Apparatus according to Claim 1, characterised in that the means for forming the region (S) is a point or slot mask behind which the sample, which is irradiated by primary radiation, is arranged.

3. Apparatus according to Claim 1, characterised in that the means for forming the region (S) are combined with the means for exciting the region (S).

4. Apparatus according to Claim 1 or one of the preceding Claims, characterised in that the parabolically curved analyser crystal is replaced to an approximation by individual pieces of crystal which are not parabolically curved and the mean curvatures of which approximately correspond to the curvatures of the parabolic pieces replaced thereby.

5. Apparatus according to one of the preceding Claims, characterised in that a double-curved analyser crystal is provided, the second curvature of which extends so as to be rotationally symmetrical with respect to the detector axis (D).

**Revendications**

1. Dispositif pour l'analyse par rayons X avec des moyens pour exciter le rayonnement fluoroscopique par rayons X dans une plage (S) d'un échantillon, avec un cristal analyseur (K) et avec un détecteur linéaire et à sensibilité locale (OED), caractérisé par le fait que l'on prévoit des moyens pour conformer ladite plage de façon à peu près ponctuelle ou linéaire, qu'il est prévu en tant qu'emplacement local de la plage (S) le foyer d'un cristal analyseur (K) incurvé de façon parabolique dans au moins un plan de section transversale et dont les plans du réseau s'étendent parallèlement à sa surface, et que le détecteur linéaire et à sensibilité locale (OED) est disposé avec un axe (D) s'étendant dans la direction de son extension linéaire, dans ledit plan de section transversal, perpendiculairement à l'axe (a) de la parabole du cristal analyseur parabolique (K) et en face de ce dernier.

2. Dispositif selon la revendication 1, caractérisé par le fait que les moyens destinés à conformer la plage (S) sont constitués par un diaphragme à ouverture ponctuelle ou en fente, derrière lequel est disposé l'échantillon irradié par un rayonnement primaire.

3. Dispositif selon la revendication 1, caractérisé par le fait que les moyens pour conformer la plage (S) sont combinés avec les moyens pour exciter la plage (S).

4. Dispositif selon la revendication 1 ou l'une des revendications précédentes, caractérisé par le fait que le cristal analyseur incurvé de façon parabolique est remplacé par des morceaux individuels de cristal, non incurvés de façon parabolique et dont les courbures moyennes coïncident sensiblement avec les courbures des morceaux de parabole qu'ils remplacent.

5. Dispositif selon l'une des revendications précédentes, caractérisé par le fait qu'il est prévu un cristal analyseur à double courbure, dont la seconde courbure présente une symétrie de rotation par rapport à l'axe du détecteur.